# EUROPEAN PATENT SPECIFICATION

(11) **EP 2 003 820 B1**
(45) Date of publication and mention of the grant of the patent: **22.06.2011**
(21) Application number: 07720593.8
(22) Date of filing: 29.03.2007
(51) Int. Cl.: H04L 12/56, H04L 12/54, H04L 12/28

(54) **METHOD AND DEVICE OF LEARNING FORWARDING FEATURE INFORMATION**
VERFAHREN UND EINRICHTUNG ZUM ERFAHREN VON WEITERLEITUNGSMERKMALINFORMATIONEN
PROCÉDÉ ET DISPOSITIF D'APPRENTISSAGE D'INFORMATION DE CARACTÉRISTIQUES DE TRANSFERT

(30) Priority: 29.03.2006 CN 200610073421
(43) Date of publication of application: 17.12.2008
(73) Proprietor: Huawei Technologies Co., Ltd., Longgang District, Shenzhen Guangdong 518129 (CN)
(72) Inventor: JIANG, Zhangzhen, Guangdong Province 518129 (CN)
(74) Representative: Kreuz, Georg Maria
(86) International application number: PCT/CN2007/001019
(87) International publication number: WO 2007/115484

(56) References cited:
- CN-A- 1 581 843
- DE-A1- 19 944 201
- US-A1- 2001 028 651
- US-A1- 2003 009 584
- US-B1- 6 570 877
- US-B1- 6 658 003

## Description

### Field of the Invention

The present invention relates to the field of data communications and in particular to a method and device for learning data forwarding information.

### Background of the invention

There is a need of forwarding a large amount of data through forwarding devices in data communications, and the forwarding devices need to self learn forwarding information. For instance, when an Ethernet switch receives a MAC frame through an interface in the Ethernet switch, a primary task of the switch is to find an output interface according to a destination address of the MAC frame and forward the MAC frame to the output interface.

Typically, a forwarding table is present in the Ethernet switch, and an output interface is selected for each MAC frame from the table according to the destination address of the received MAC frame. There are the following two routing approaches.

(1) *Fixed routing*

In the fixed routing, there is a manually configured forwarding table in which each interface and its corresponding destination address are specified. Although the fixed routing is a kind of routing approach, configuration of the forwarding table becomes a burdensome task in the case of an excessively large scale of a network. In addition to this, configuration of the network may often be altered or a host may be added or deleted in the network where the switch is located, and therefore it is difficult for an administrator of the network to timely update the forwarding table so as to adapt it to a topology change.

(2) *Self-learning routing*

In a practical application, a dynamic forwarding table is typically created by a self-learning method to automatically adapt the forwarding table to a topology change of the network. The dynamic forwarding table can be obtained through continuous modification in a self-learning process based upon a manually created forwarding table.

The self-learning means that a forwarding table is created or updated according to a source address of a MAC frame arriving at each interface. It is assumed that a switch receives a MAC frame through an interface X, checks and finds that a source address of the MAC frame is an address A, indicating that any MAC frame having a destination address of the address A shall be forwarded through the interface X. Upon reception of the MAC frame having the source addressing of the address A from the X interface, a control part of the switch checks the forwarding table. If the address A is not included in destination address item in the forwarding table, the content of the address A is added in the destination address item corresponding to the interface X; and if the address A is included in the destination address item in the forwarding table, destination address item nevertheless corresponding to an interface Y, the forwarding table shall be modified.

As can be seen from the above, the Ethernet switch creates a forwarding table using a broadcast frame and self-learning method. Once the forwarding table is configured, routing is selected for a subsequent MAC frame according to a destination MAC address (without any label) and the forwarding table, thereby forming a virtual circuit from a source host to a destination host.

Because the number of the table items which can be stored in a device is limited, recently learnt new forwarding information cannot be stored into the forwarding table if the new forwarding information exceeds the number of the table items which can be stored in the device, or the new forwarding information can be stored only if any other table item is deleted.

The following two solutions for solving this problem have been proposed in the prior art.

### First solution

In the first solution, recently learnt new information can not be recorded into a forwarding table when the forwarding table is full.

In this solution, relatively important new forwarding feature information, though having been learnt, may not be recorded into the forwarding table.

### Second solution

In the second solution, information that is closest to aging or was the first to be leat is deleted when a forwarding table is full, and new forwarding information can be recorded into the forwarding table.

In this solution, the deleted aged information or the first learnt information may be forwarding information of an important service.

Related art is known from:
D1 (US-B1-6 570 877) discloses a hardware search engine facility allowing CPU search and update of a forwarding table CAM under the control of software running on the CPU.
D2 (US 2001 028 651 A1) discloses a cache table management device for raising the cache hit probability for entries inserted in groups between a forwarding table 103 and cache 102.

### Summary of the Invention

An object of the invention is to overcome the drawback present in the prior art that relatively important new forwarding feature information cannot be recorded or stored, and further to provide a method and device for learning data forwarding information. According to this method and device. Forwarding information of a relatively least important service may be deleted so as to ensure that forwarding information of an important service can be stored into a forwarding table.

A method for learning forwarding feature information, in which a corresponding service importance level is configured for the forwarding feature information, includes:
receiving new forwarding feature information;
if the forwarding table is not full, recording the new forwarding feature information into a forwarding table and recording a service importance level corresponding to the forwarding feature information, wherein the service importance level is determined based on at least one of an interface, a VLAN ID, an MAC address and an IP address of a service; and
if the forwarding table is full, determining whether to write the new forwarding feature information into the forwarding table according to the service importance level of the new forwarding feature information; and if the service importance level of the new forwarding feature information is higher than the lowest service importance level among the service importance levels corresponding to the forwarding feature information recorded in the forwarding table, deleting a piece of forwarding feature information corresponding to the lowest service importance level in the forwarding table, recording the new forwarding feature information into the forwarding table, and recording the service importance level corresponding to the new forwarding feature information.

A device for learning forwarding feature information includes:
a forwarding table storing module adapted to store a forwarding table recording forwarding feature information;
a service importance level table storing module adapted to record service importance levels corresponding to the forwarding feature information recorded in the forwarding table, wherein the service importance level is determined based on at least one of an interface, a VLAN ID, an MAC address and an IP address of a service; and
a forwarding feature information processing module adapted to determine whether the forwarding table is full upon reception of new forwarding feature information;
the device is adapted to:
if the forwarding table is not full, record the new forwarding feature information into the forwarding table and record a service importance level corresponding to the new forwarding feature information into the service importance level table storing module; and
if the forwarding table is full and the service importance level of the new forwarding feature information is higher than the lowest service importance level among service importance levels corresponding to the forwarding feature information recorded in the forwarding table, delete a piece of forwarding feature information corresponding to the lowest service importance level, record the new forwarding feature information into the forwarding table, and record the service importance level corresponding to the new forwarding feature information into the forwarding feature information processing module.

Advantageous effects of the invention lie in that important forwarding information can be retained and recorded so as to better serve an important service because of the deletion of information according to service importance of the forwarding feature information.

### Brief Descriptions of the Drawings

Fig.1 is a flow diagram of the method for learning data forwarding information according to an embodiment of the present application;

Fig.2 is a flow diagram of the method for learning data forwarding information according to another embodiment of the present application;

Fig.3 is a structure diagram of the device for learning data forwarding information according to an embodiment of the present application; and

Fig.4 is a structure diagram of the device for learning data forwarding information according to another embodiment of the present application.

### Detailed Descriptions of the Embodiments

The invention is further described hereinafter by reference to the accompanying drawings and embodiments without limitation thereto.

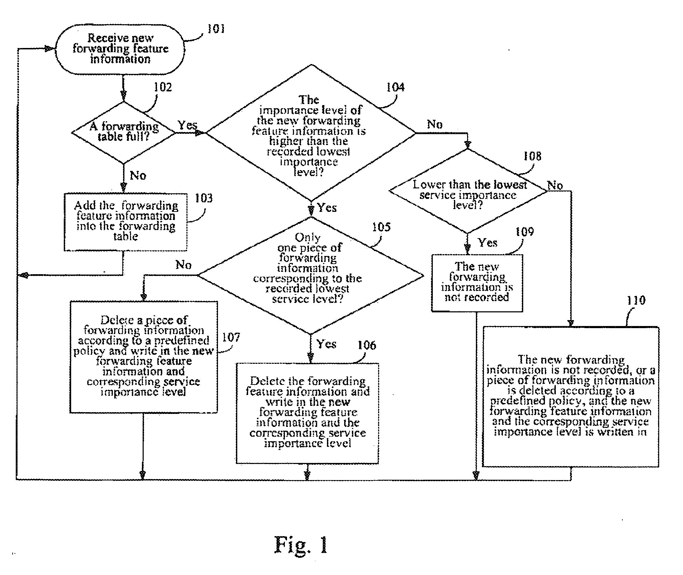

Referring to Fig.1, specific steps of the method according to the invention are as follows.

In a step 100, a corresponding service importance level is configured for forwarding feature informations, and the service importance level can be configured manually, and also can be generated automatically according to signaling.

Another way can also be used as a criterion of evaluating the importance of a service. That is, the importance can be ranked according to the form of certain data. For instance, an Ethernet switch is provided with interfaces A, B, C and D. Data in the form of VLAN 100 over each interface is the most important, and thus has a service importance level of 1, and data in the form of VLAN 105 is the relatively least important, and thus has a service importance level of 5. As such, if a service received from an interface is related to the VLAN 100, the service importance level corresponding to the service is 1.

Further, other ways can also be used to indicate the importance of a service.

It is assumed in this embodiment that a corresponding service importance is configured according to an interface.

In a step 101, a switch receives new forwarding feature information, and the forwarding feature information includes a forwarding source address, a forwarding destination address and a forwarding interface. If the service importance is configured according to another feature. For instance, if the service importance is ranked according to the form of data, the forwarding feature information includes a VLAN ID; if the importance is ranked according to a MAC address, the forwarding feature information includes a corresponding MAC address; and if the importance is ranked according to an IP address, the forwarding feature information includes a corresponding IP address.

In a step 102, it is determined whether a forwarding table is full; and if not full, the flow goes to a step 103; otherwise, the flow goes to a step 104.

In the step 103, the new forwarding feature information received in the step 101 and the corresponding service importance level are added into the forwarding table, and the flow terminates and is ready for reception of new forwarding feature information again.

In this embodiment, the forwarding table includes the service importance levels corresponding to the forwarding feature information. In practice, the service importance levels can also be listed separately, and a specific data organization mode is not limited, as long as the service importance levels correspond to feature information that can be forwarded.

In the step 104, it is determined whether the service importance level of the new forwarding feature information is higher than the lowest recorded service importance level; and if there is, the flow goes to a step 105; otherwise, the flow goes to a step 108.

In the step 105, it is determined whether there is only one piece of forwarding feature information corresponding to the lowest recorded service importance level; and if there is, the flow goes to a step 106; otherwise, the flow goes to a step 107.

In the step 106, the piece of the forwarding feature information is deleted, and the new forwarding feature information and the corresponding service importance level are written into the table.

In the step 107, a piece of forwarding feature information is deleted according to a predefined policy, and the new forwarding feature information and the corresponding service importance level are written into the table. For instance, the deleted forwarding feature information is a piece of forwarding information which is selected randomly from the forwarding feature information corresponding to the lowest service importance level, or which is closest to aging or was the first to be learnt among the forwarding feature information corresponding to the lowest service importance level. The predefined policy can also be configured according to practical circumstances.

In the step 108, it is determined whether the service importance level of the new forwarding feature information is lower than the lowest one of the service importance levels corresponding to the forwarding feature information in the forwarding table; and if lower, the flow goes to a step 109; otherwise, the flow goes to the step 110.

In the step 109, the new forwarding feature information is not recorded, and reception of new forwarding feature information is started.

In the step 110, the new forwarding feature information is not recorded, or a piece of forwarding feature information is deleted according to a predefined policy and the new forwarding feature information and the corresponding service importance level are written into the table. For instance, the deleted forwarding feature information is a piece of forwarding feature information which is selected randomly from the forwarding feature information corresponding to the lowest service importance level, or closest to aging or was the first to be learnt among the forwarding feature information corresponding to the lowest service importance level.

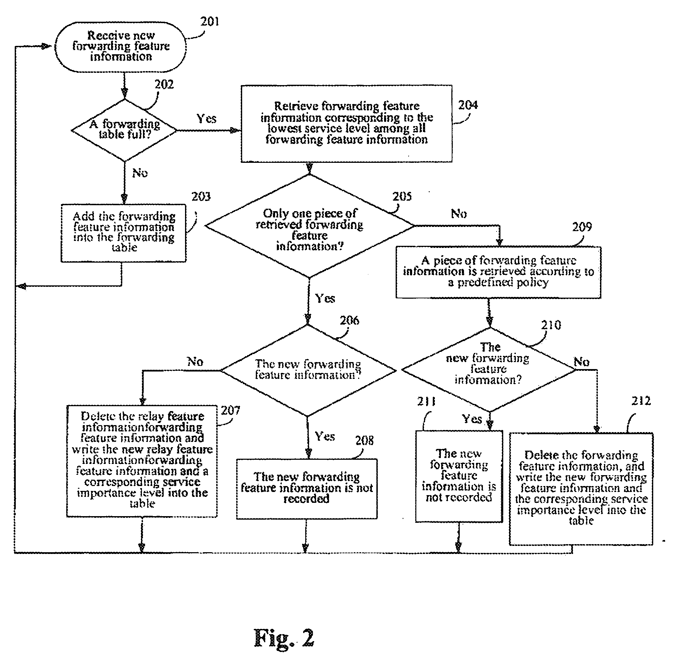

Referring to Fig.2, the invention also provides a second embodiment where steps 201-203 are substantially identical to those in the preceding embodiment except for a different determination method. Specific steps of the second embodiment are as follows.

In the step 201, a switch receives new forwarding feature information, and the forwarding feature information includes a forwarding source address, a forwarding destination address and a forwarding interface. If the service importance is configured according to another feature, for instance, if the service importance is ranked according to the form of data, the forwarding feature information includes a VLAN ID; if the service importance is ranked according to a MAC address, the forwarding feature information includes a corresponding MAC address; and if the service importance is ranked according to an IP address, the forwarding feature information includes a corresponding IP address.

In the step 202, it is determined whether a forwarding table is full; and if not full, the flow goes to the step 203; otherwise, the flow goes to a step 204.

In the step 203, the new forwarding feature information received in the step 201 and the corresponding service importance level are added into the forwarding table, and the flow terminates and is ready for reception of new forwarding feature information again. In the embodiment, the forwarding table includes the service importance levels corresponding to the forwarding feature information. In practice, the service importance levels can also be listed separately, and a specific data organization mode is not limited, as long as the service importance levels correspond to the feature information that can be forwarded.

In the step 204, the forwarding feature information corresponding to the lowest service importance level is retrieved from all the forwarding feature information including the new forwarding feature information and the forwarding feature information in the forwarding table.

In the step 205, it is determined whether there is only one piece of retrieved forwarding feature information; and if there is, the flow goes to a step 206; otherwise, the flow goes to a step 209.

In the step 206, it is determined whether the forwarding feature information is the new forwarding feature information; and if there is, the flow goes to a step 208; otherwise, the flow goes to a step 207.

In the step 207, the forwarding feature information retrieved in the step 204 is deleted from the forwarding table, and the new forwarding feature information and the corresponding service importance level are written into the forwarding table. Reception of new forwarding feature information is started.

In the step 208, the new forwarding feature information is not recorded, and reception of new forwarding feature information is started.

In the step 209, a piece of information is selected from the forwarding feature information retrieved in the step 204 according to a predefined policy, for instance, the selected forward feature information is a piece of forwarding feature information which is selected randomly or closest to aging or was the first to be learnt.

In a step 210, it is determined whether the selected information is the new forwarding feature information. If the selected information is the new forwarding feature information, the new forwarding feature information is not recorded in a step 211; otherwise, the information selected in the step 209 is deleted from the forwarding table, and the new forwarding feature information and the corresponding service importance level are written into the table.

For instance, an Ethernet switch is provided with four interfaces A, B, C and D. A service over the interface A is the most important, and a service over the interface D is the relatively least important. There are learnt 100 MAC address forwarding table items including 20 items from the interface A, 30 items from the interface B, 20 items from the interface C and 30 items from the interface D.

If an address learning function module of the switch learns an address from the interface A, a forwarding module knows from a record that a service over the interface A is important, and a relatively least important item of the interface D is retrieved and deleted. An item of the interface A is written into the forwarding table. Because the interface D correspond 30 items at this time, a piece of information is deleted according to a predefined policy. For instance, the deleted forward feature information is a piece of forwarding feature information which is randomly selected or closest to aging or was the first to be learnt.

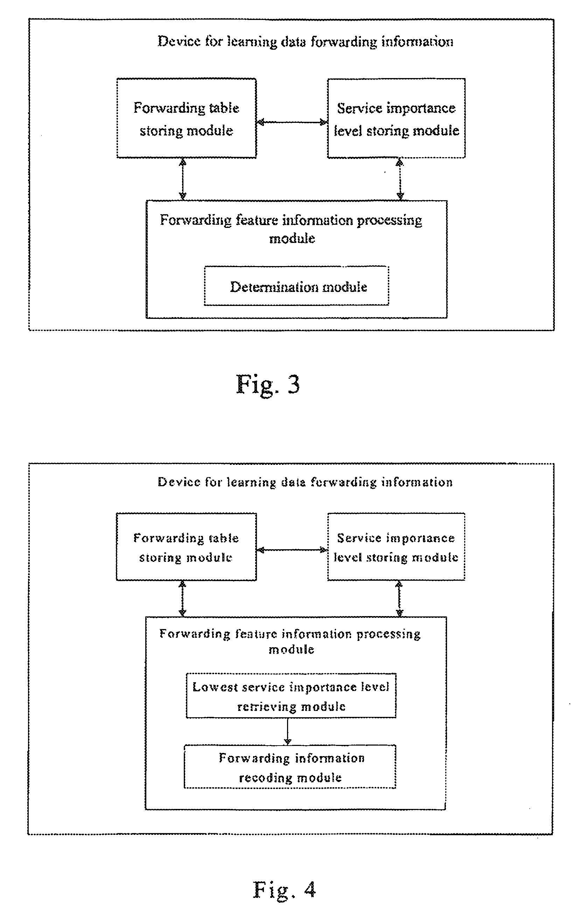

Referring to Fig.3, the invention also provides a device for learning data forwarding information, which device includes a forwarding table storing module for storing a forwarding table, and a service importance level table storing module and a forwarding feature information processing module.

The service importance level table storage module is adapted to store the service importance levels corresponding to the forwarding feature information.

The forwarding feature information processing module is adapted to determine whether the forwarding table is full upon reception of new forwarding feature information; and if full, determine whether to write the new forwarding feature infonnation into the forwarding table according to a service importance level of the new forwarding feature information; otherwise, add the new forwarding feature information into the forwarding table and record the corresponding service importance level.

The forwarding feature information processing module includes a determination module adapted to determine whether the service importance level of the new forwarding feature information is higher than the lowest recorded service importance level, and if higher, the forwarding feature information corresponding to the lowest recorded service importance level, record the new forwarding feature information into the forwarding table, and record the service importance level corresponding to the new forwarding feature information; otherwise, record the new forwarding feature information, or select and delete one piece of forwarding feature information among the forwarding feature information corresponding to the lowest service importance level in the forwarding table according to a predefined policy, record the new forwarding feature information into the forwarding table, and record the service importance level corresponding to the new forwarding feature information.

Referring to Fig.4, the forwarding feature information processing module in the device of the invention may also include a lowest service importance level retrieving module and a forwarding information recording module.

The lowest service importance level retrieving module is adapted to retrieve the lowest service importance level among the service importance level corresponding to the new forwarding feature information and the recorded service importance levels.

The forwarding information recording module is adapted to determined whether the forwarding feature information corresponding to the lowest service importance level is the new forwarding feature information, and if so, the new forwarding feature information is not recorded; otherwise, delete the forwarding feature information corresponding to the lowest service importance level, record the new forwarding feature information into the forwarding table, and record the service importance level corresponding to the new forwarding feature information.

The foregoing descriptions are merely illustrative of the exemplary embodiments of the invention, and obvious variations and substitutions which can be made by those skilled in the art without departing from the technical sections or the invention are intended to be encompassed in the scope of the invention as defined by the accompanying claims.

## Claims

1. A method for learning forwarding feature information, the method comprising:
receiving new forwarding feature information (101);
if the forwarding table is not full (102), recording the new forwarding feature information into a forwarding table (103) and recording a service importance level corresponding to the forwarding feature information, wherein the service importance level is determined based on at least one of an interface, a VLAN ID, an MAC address and an IP address of a service; and
if the forwarding table is full (102), determining whether to write the new forwarding feature information into the forwarding table according to the service importance level of the new forwarding feature information, wherein the determining whether to write the new forwarding feature information into the forwarding table according to the service importance level of the new forwarding feature information comprises:
if the service importance level of the new forwarding feature information is higher than the lowest service importance level among the service importance levels corresponding to the forwarding feature information recorded in the forwarding table (104), deleting a piece of forwarding feature information corresponding to the lowest service importance level in the forwarding table, recording the new forwarding feature information into the forwarding table, and recording the service importance level corresponding to the new forwarding feature information.

2. The method according to claim 1, further comprising:
not recording the new forwarding feature information (109) if the service importance level of the new forwarding feature information is lower than the lowest service importance level among the service importance levels corresponding to the forwarding feature information recorded in the forwarding table (108); and
if the service importance level of the new forwarding feature information is equal to the lowest service importance level among the service importance levels corresponding to the forwarding feature information recorded in the forwarding table (108), not recording the new forwarding feature information, or deleting a piece of forwarding feature information corresponding to the lowest service importance level in the forwarding table according to a predetermined policy, recording the new forwarding feature information into the forwarding table and recording the service importance level corresponding to the new forwarding feature information. (110).

3. The method according to claim 1 or 2, wherein the deleting a piece of forwarding feature information corresponding to the lowest service importance level in the forwarding table comprises:
if there is only one piece of forwarding feature information corresponding to the lowest service importance level in the forwarding table (105), deleting the only one piece of forwarding feature information corresponding to the lowest service importance level, recording the new forwarding feature information into the forwarding table, and recording the service importance level corresponding to the new forwarding feature information (106); and
if there are multiple pieces of forwarding feature information corresponding to the lowest service importance level in the forwarding table (105), selecting and deleting one piece of information among the multiple pieces of forwarding feature information corresponding to the lowest service importance level according to a predetermined policy, recording the new forwarding feature information into the forwarding table, and recording the service importance level corresponding to the new forwarding feature information (107).

4. The method according to claim 1 or 2, wherein the recording the service importance level comprises: recording the service importance level into the forwarding table, or recording the service importance level into a separate service importance information table.

5. The method according to claim 2 or 3, wherein the predetermined policy is that a piece of forwarding feature information is selected randomly, or a piece of forwarding feature information, which is closest to aging, is selected, or a piece of forwarding feature information, which was the first to be learnt, is selected.

6. The method according to claim 1, wherein the service importance level is configured manually or is generated automatically according to signaling.

7. A device for learning forwarding feature information, comprising:
a forwarding table storing module adapted to store forwarding table recording forwarding feature information;
a service importance level table storing module adapted to record service importance levels corresponding to the forwarding feature information recorded in the forwarding table, wherein the service importance level is determined based on at least one of an interface, a VLAN ID, an MAC address and an IP address of a service; and
a forwarding feature information processing module adapted to determine whether the forwarding table is full upon reception of new forwarding feature information; and if full, determine whether to write the new forwarding feature information into the forwarding table according to a service importance level of the new forwarding feature information; otherwise, add the new forwarding feature information into the forwarding table and record the corresponding service importance level, wherein the forwarding feature information processing module comprises:
a determination module adapted to determine whether the service importance level of the new forwarding feature information is higher than the lowest one among the service importance levels corresponding to the forwarding feature information recorded in the forwarding table, wherein if the forwarding table is full and if the service importance level of the new forwarding feature information is higher than the lowest service importance level among service importance levels corresponding to the forwarding feature information recorded in the forwarding table, delete a piece of forwarding feature information corresponding to the lowest service importance level, record the new forwarding feature information into the forwarding table, and record the service importance level corresponding to the new forwarding feature information into the forwarding feature information processing module.

8. The device according to claim 7, wherein:
the forwarding feature information processing module does not record the new forwarding feature information if the service importance level of the new forwarding feature information is lower than the lowest one among the service importance levels corresponding to the forwarding feature information recorded in the forwarding table; and
if the service importance level of the new forwarding feature information is equal to the lowest service importance level among the service importance levels corresponding to the forwarding feature information recorded in the forwarding table, the forwarding feature information processing module does not record the new forwarding feature information, or deletes a piece of forwarding feature information corresponding to the lowest service importance level in the forwarding table according to a predetermined policy, records the new forwarding feature information into the forwarding table, and records the service importance level corresponding to the new forwarding feature information into the service importance level table storing module.

9. The device according to claim 7 or 8, wherein the forwarding feature information processing module comprises:
a service importance level retrieving module adapted to retrieve the lowest one among the service importance level corresponding to the new forwarding feature information and recorded service importance levels; and
a forwarding information recording module adapted to delete the forwarding feature information corresponding to the lowest service importance level, to record the new forwarding feature information into the forwarding table, and to record the service importance level corresponding to the new forwarding feature information into the service importance level table storing module.

## Patentansprüche

1. Verfahren zum Erfahren von Weiterleitungsmerkmalinformationen, mit den folgenden Schritten:
Empfangen von neuen Weiterleitungsmerkmalinformationen (101);
Aufzeichnen der neuen Weiterleitungsmerkmalinformationen in einer Weiterleitungstabelle (103), wenn die Weiterleitungstabelle nicht voll ist (102), und Aufzeichnen eines den Weiterleitungsmerkmalinformationen entsprechenden Dienstwichtigkeitsgrads, wobei der Dienstwichtigkeitsgrad auf der Basis einer Schnittstelle und/oder einer VLAN ID und/oder einer MAC-Adresse und/oder einer IP-Adresse eines Dienstes bestimmt wird; und
Bestimmen, ob die neuen Weiterleitungsmerkmalinformationen in die Weiterleitungstabelle geschrieben werden sollen, gemäß dem Dienstwichtigkeitsgrad der neuen Weiterleitungsmerkmalinformationen, wenn die Weiterleitungstabelle voll ist (102), wobei das Bestimmen, ob die neuen Weiterleitungsmerkmalinformationen in die Weiterleitungstabelle geschrieben werden sollen, gemäß dem Dienstwichtigkeitsgrad der neuen Weiterleitungsmerkmalinformationen, Folgendes umfasst:
wenn der Dienstwichtigkeitsgrad der neuen Weiterleitungsmerkmalinformationen höher als der niedrigste Dienstwichtigkeitsgrad unter den Dienstwichtigkeitsgraden ist, die den Weiterleitungsmerkmalinformationen entspechen, die in der Weiterleitungstabelle aufgezeichnet sind (104), Löschen eines Elements von Weiterleitungsmerkmalinformationen, das dem niedrigsten Dienstwichtigkeitsgrad entspricht, in der Weiterleitungstabelle, Aufzeichnen der neuen Weiterleitungsmerkmalinformationen in der Weiterleitungstabelle und Aufzeichnen des Dienstwichtigkeitsgrads, der den neuen Weiterleitungsmerkmalinformationen entspricht.

2. Verfahren nach Anspruch 1, ferner mit den folgenden Schritten:
Nichtaufzeichnen der neuen Weiterleitungsmerkmalinformationen (109), wenn der Dienstwichtigkeitsgrad der neuen Weiterleitungsmerkmalinformationen niedriger als der niedrigste Dienstwichtigkeitsgrad unter den Dienstwichtigkeitsgraden ist, die den in der Weiterleitungstabelle aufgezeichneten Weiterleitungsmerkmalinformationen entsprechen (108); und
wenn der Dienstwichtigkeitsgrad der neuen Weiterleitungsmerkmalinformationen gleich dem niedrigsten Dienstwichtigkeitsgrad unter den Dienstwichtigkeitsgraden ist, die den in der Weiterleitungstabelle aufgezeichneten Weiterleitungsmerkmalinformationen entsprechen (108), Nichtaufzeichnen der neuen Weiterleitungsmerkmalinformationen oder Löschen eines Elements von Weiterleitungsmerkmalinformationen, das dem niedrigsten Dienstwichtigkeitsgrad entspricht, in der Weiterleitungstabelle gemäß einer vorbestimmten Richtlinie, Aufzeichnen der neuen Weiterleitungsmerkmalinformationen in der Weiterleitungstabelle und Aufzeichnen des Dienstwichtigkeitsgrads, der den neuen Weiterleitungsmerkmalinformationen entspricht (110).

3. Verfahren nach Anspruch 1 oder 2, wobei das Löschen eines Elements von Weiterleitungsmerkmalinformationen, das dem niedrigsten Dienstwichtigkeitsgrad entspricht, in der Weiterleitungstabelle Folgendes umfasst:
wenn in der Weiterleitungstabelle nur ein Element von Weiterleitungsmerkmalinformationen vorliegt (105), das dem niedrigsten Dienstwichtigkeitsgrad entspricht, Löschen des einzigen Elements von Weiterleitungsmerkmalinformationen, das dem niedrigsten Dienstwichtigkeitsgrad entspricht, Aufzeichnen der neuen Weiterleitungsmerkmalinformationen in der Weiterleitungstabelle und Aufzeichnen des Dienstwichtigkeitsgrads, der den neuen Weiterleitungsmerkmalinformationen entspricht (106); und
wenn in der Weiterleitungstabelle mehrere Elemente von Weiterleitungsmerkmalinformationen vorliegen (105), die dem niedrigsten Dienstwichtigkeitsgrad entsprechen, Auswählen und Löschen eines Elements von Informationen unter den mehreren Elementen von Weiterleitungsmerkmalinformationen, die dem niedrigsten Dienstwichtigkeitsgrad entsprechen, gemäß einer vorbestimmten Richtlinie, Aufzeichnen der neuen Weiterleitungsmerkmalinformationen in der Weiterleitungstabelle und Aufzeichnen des Dienstwichtigkeitsgrads, der den neuen Weiterleitungsmerkmalinformationen entspricht (107).

4. Verfahren nach Anspruch 1 oder 2, wobei das Aufzeichnen des Dienstwichtigkeitsgrads Folgendes umfasst:
Aufzeichnen des Dienstwichtigkeitsgrads in der Weiterleitungstabelle oder Aufzeichnen des Dienstwichtigkeitsgrads in einer separaten Dienstwichtigkeitsinformationstabelle.

5. Verfahren nach Anspruch 2 oder 3, wobei die vorbestimmte Richtlinie darin besteht, dass ein Element von Weiterleitungsmerkmalinformationen zufällig ausgewählt wird oder ein Element von Weiterleitungsmerkmalinformationen, das als nächstes altert, ausgewählt wird, oder ein Element von Weiterleitungsmerkmalinformationen, das als Erstes erfahren wurde, ausgewählt wird.

6. Verfahren nach Anspruch 1, wobei der Dienstwichtigkeitsgrad manuell konfiguriert oder automatisch gemäß Signalisierung erzeugt wird.

7. Einrichtung zum Erfahren von Weiterleitungsmerkmalinformationen, umfassend:
ein Weiterleitungstabellen-Speichermodul, das dafür ausgelegt ist, Weiterleitungstabellen-Aufzeichnungsweiterleitungsmerkmalinformationen zu speichern;
ein Dienstwichtigkeitsgrad-Tabellenspeichermodul, das dafür ausgelegt ist, Dienstwichtigkeitsgrade, die den Weiterleitungsmerkmalinformationen entsprechen, die in der Weiterleitungstabelle aufgezeichnet sind, aufzuzeichnen, wobei der Dienstwichtigkeitsgrad auf der Basis einer Schnittstelle und/oder einer VLAN ID und/oder einer MAC-Adresse und/oder einer IP-Adresse eines Dienstes bestimmt wird; und
ein Weiterleitungsmerkmalinformationsverarbeitungsmodul, das dafür ausgelegt ist, beim Empfang von neuen Weiterleitungsmerkmalinformationen zu bestimmen, ob die Weiterleitungstabelle voll ist; und wenn sie voll ist, gemäß einem Dienstwichtigkeitsgrad der neuen Weiterleitungsmerkmalinformationen zu bestimmen, ob die neuen Weiterleitungsmerkmalinformationen in die Weiterleitungstabelle geschrieben werden sollen; und andernfalls die neuen Weiterleitungsmerkmalinformationen zu der Weiterleitungstabelle hinzuzufügen und den entsprechenden Dienstwichtigkeitsgrad aufzuzeichnen, wobei das Weiterleitungsmerkmalinformationsverarbeitungsmodul Folgendes umfasst:
ein Bestimmungsmodul, das dafür ausgelegt ist zu bestimmen, ob der Dienstwichtigkeitsgrad der neuen Weiterleitungsmerkmalinformationen höher als der niedrigste unter den Dienstwichtigkeitsgraden ist, die den Weiterleitungsmerkmalinformationen entsprechen, die in der Weiterleitungstabelle aufgezeichnet sind, wobei, wenn die Weiterleitungstabelle voll ist und wenn der Dienstwichtigkeitsgrad der neuen Weiterleitungsmerkmalinformationen höher als der niedrigste Dienstwichtigkeitsgrad unter den Dienstwichtigkeitsgraden ist, die den Weiterleitungsmerkmalinformationen entsprechen, die in der Weiterleitungstabelle aufgezeichnet sind, ein Element von Weiterleitungsmerkmalinformationen, das dem niedrigsten Dienstwichtigkeitsgrad entspricht, gelöscht wird, die neuen Weiterleitungsmerkmalinformationen in der Weiterleitungstabelle aufgezeichnet werden und der Dienstwichtigkeitsgrad, der den neuen Weiterleitungsmerkmalinformationen entspricht, in dem Weiterleitungsmerkmalinformationsverarbeitungsmodul aufgezeichnet wird.

8. Einrichtung nach Anspruch 7, wobei
das Weiterleitungsmerkmalinformationsverarbeitungsmodul die neuen Weiterleitungsmerkmalinformationen nicht aufzeichnet, wenn der Dienstwichtigkeitsgrad der neuen Weiterleitungsmerkmalinformationen niedriger als der niedrigste unter den Dienstwichtigkeitsgraden ist, die den Weiterleitungsmerkmalinformationen entsprechen, die in der Weiterleitungstabelle aufgezeichnet sind; und
wenn der Dienstwichtigkeitsgrad der neuen Weiterleitungsmerkmalinformationen gleich dem niedrigsten Dienstwichtigkeitsgrad unter den Dienstwichtigkeitsgraden ist, die den Weiterleitungsmerkmalinformationen entsprechen, die in der Weiterleitungstabelle aufgezeichnet sind, das Weiterleitungsmerkmalinformationsverarbeitungsmodul die neuen Weiterleitungsmerkmalinformationen nicht aufzeichnet oder ein Element von Weiterleitungsmerkmalinformationen, das dem niedrigsten Dienstwichtigkeitsgrad entspricht, in der Weiterleitungstabelle gemäß einer vorbestimmten Richtlinie löscht, die neuen Weiterleitungsmerkmalinformationen in der Weiterleitungstabelle aufzeichnet und den Dienstwichtigkeitsgrad, der den neuen Weiterleitungsmerkmalinformationen entspricht, in dem Dienstwichtigkeitsgrad-Tabellenspeichermodul aufzeichnet.

9. Einrichtung nach Anspruch 7 oder 8, wobei das Weiterleitungsmerkmalinformationsverarbeitungsmodul Folgendes umfasst:
ein Dienstwichtigkeitsgrad-Abrufmodul, das dafür ausgelegt ist, den niedrigsten unter den Dienstwichtigkeitsgraden abzurufen, die den neuen Weiterleitungsmerkmalinformationen und aufgezeichneten Dienstwichtigkeitsgraden entsprechen; und
ein Weiterleitungsinformationsaufzeichnungsmodul, das dafür ausgelegt ist, die Weiterleitungsmerkmalinformationen, die dem niedrigsten Dienstwichtigkeitsgrad entsprechen, zu löschen, die neuen Weiterleitungsmerkmalinformationen in der Weiterleitungstabelle aufzuzeichnen und den Dienstwichtigkeitsgrad, der den neuen Weiterleitungsmerkmalinformationen entspricht, in dem Dienstwichtigkeitsgrad-Tabellenspeichermodul aufzuzeichnen.

## Revendications

1. Procédé d'apprentissage d'informations de caractéristique de renvoi, le procédé comprenant :
la réception de nouvelles informations de caractéristique de renvoi (101) ;
si la table de renvois n'est pas pleine (102), l'enregistrement des nouvelles informations de caractéristique de renvoi dans une table de renvois (103) et l'enregistrement d'un niveau d'importance de service correspondant aux informations de caractéristique de renvoi, le niveau d'importance de service étant déterminé en fonction d'au moins l'une d'une interface, d'une ID VLAN, d'une adresse MAC et d'une adresse IP d'un service ; et
si la table de renvois est pleine (102), la détermination s'il convient ou non d'écrire les nouvelles informations de caractéristique de renvoi dans la table de renvois en fonction du niveau d'importance de service des nouvelles informations de caractéristique de renvoi, la détermination s'il convient ou non d'écrire les nouvelles informations de caractéristique de renvoi dans la table de renvois en fonction du niveau d'importance de service des nouvelles informations de caractéristique de renvoi comprenant :
si le niveau d'importance de service des nouvelles informations de caractéristique de renvoi est supérieur au plus bas niveau d'importance de service parmi les niveaux d'importance de service correspondant aux informations de caractéristique de renvoi enregistrées dans la table de renvois (104), la suppression d'une information de caractéristique de renvoi correspondant au plus bas niveau d'importance de service dans la table de renvois, l'enregistrement des nouvelles informations de caractéristique de renvoi dans la table de renvois, et l'enregistrement du niveau d'importance de service correspondant aux nouvelles informations de caractéristique de renvoi.

2. Procédé selon la revendication 1, comprenant en outre :
le non-enregistrement des nouvelles informations de caractéristique de renvoi (109) si le niveau d'importance de service des nouvelles informations de caractéristique de renvoi est inférieur au plus bas niveau d'importance de service parmi les niveaux d'importance de service correspondant aux informations de caractéristique de renvoi enregistrées dans la table de renvois (108) ; et
si le niveau d'importance de service des nouvelles informations de caractéristique de renvoi est égal au plus bas niveau d'importance de service parmi les niveaux d'importance de service correspondant aux informations de caractéristique de renvoi enregistrées dans la table de renvois (108), le non-enregistrement des nouvelles informations de caractéristique de renvoi, ou la suppression d'une information de caractéristique de renvoi correspondant au plus bas niveau d'importance de service dans la table de renvois en fonction d'une règle prédéterminée, l'enregistrement des nouvelles informations de caractéristique de renvoi dans la table de renvois, et l'enregistrement du niveau d'importance de service correspondant aux nouvelles informations de caractéristique de renvoi (110).

3. Procédé selon la revendication 1 ou 2, dans lequel la suppression d'une information de caractéristique de renvoi correspondant au plus bas niveau d'importance de service dans la table de renvois comprend :
s'il n'existe qu'une seule information de caractéristique de renvoi correspondant au plus bas niveau d'importance de service dans la table de renvois (105), la suppression de la seule information de caractéristique de renvoi correspondant au plus bas niveau d'importance de service, l'enregistrement des nouvelles informations de caractéristique de renvoi dans la table de renvois, et l'enregistrement du niveau d'importance de service correspondant aux nouvelles informations de caractéristique de renvoi (106) ; et
s'il n'existe de multiples informations de caractéristique de renvoi correspondant au plus bas niveau d'importance de service dans la table de renvois (105), la sélection et la suppression d'une information parmi les multiples informations de caractéristique de renvoi correspondant au plus bas niveau d'importance de service en fonction d'une règle prédéterminée, l'enregistrement des nouvelles informations de caractéristique de renvoi dans la table de renvois, et l'enregistrement du niveau d'importance de service correspondant aux nouvelles informations de caractéristique de renvoi (107).

4. Procédé selon la revendication 1 ou 2, dans lequel l'enregistrement du niveau d'importance de service comprend : l'enregistrement du niveau d'importance de service dans la table de renvois, ou l'enregistrement du niveau d'importance de service dans une table séparée d'informations d'importance de service.

5. Procédé selon la revendication 2 ou 3, dans lequel la règle prédéterminée est qu'une information de caractéristique de renvoi est sélectionnée au hasard, ou qu'une information de caractéristique de renvoi, qui est la plus ancienne, est sélectionnée, ou qu'une information de caractéristique de renvoi, qui a été la première apprise, est sélectionnée.

6. Procédé selon la revendication 1, dans lequel le niveau d'importance de service est configuré manuellement ou est généré automatiquement en fonction de la signalisation.

7. Dispositif d'apprentissage d'informations de caractéristique de renvoi, comprenant :
un module de mémorisation de table de renvois adapté pour mémoriser des informations de caractéristique de renvoi d'enregistrement de table de renvois ;
un module de mémorisation de table de niveaux d'importance de service adapté pour enregistrer des niveaux d'importance de service correspondant aux informations de caractéristique de renvoi enregistrées dans la table de renvois, le niveau d'importance de service étant déterminé en fonction d'au moins l'une d'une interface, d'une ID VLAN, d'une adresse MAC et d'une adresse IP d'un service ; et
un module de traitement d'informations de caractéristique de renvoi adapté pour déterminer si la table de renvois est pleine ou non à la réception de nouvelles informations de caractéristique de renvoi ; et si elle est pleine, déterminer s'il convient ou non d'écrire les nouvelles informations de caractéristique de renvoi dans la table de renvois en fonction du niveau d'importance de service des nouvelles informations de caractéristique de renvoi ; si elle n'est pas pleine, ajouter les nouvelles informations de caractéristique de renvoi dans la table de renvois et enregistrer le niveau d'importance de service correspondant, le module de traitement d'informations de caractéristique de renvoi comprenant :
un module de détermination adapté pour déterminer si le niveau d'importance de service des nouvelles informations de caractéristique de renvoi est supérieur au plus bas niveau d'importance de service parmi les niveaux d'importance de service correspondant aux informations de caractéristique de renvoi enregistrées dans la table de renvois, où si la table de renvois est pleine, et si le niveau d'importance de service des nouvelles informations de caractéristique de renvoi est supérieur au plus bas niveau d'importance de service parmi les niveaux d'importance de service correspondant aux informations de caractéristique de renvoi enregistrées dans la table de renvois, supprimer une information de caractéristique de renvoi correspondant au plus bas niveau d'importance de service, enregistrer les nouvelles informations de caractéristique de renvoi dans la table de renvois, et enregistrer le niveau d'importance de service correspondant aux nouvelles informations de caractéristique de renvoi dans le module de traitement d'informations de caractéristique de renvoi.

8. Dispositif selon la revendication 7, dans lequel :
le module de traitement d'informations de caractéristique de renvoi n'enregistre pas les nouvelles informations de caractéristique de renvoi si le niveau d'importance de service des nouvelles informations de caractéristique de renvoi est inférieur au plus bas niveau d'importance de service parmi les niveaux d'importance de service correspondant aux informations de caractéristique de renvoi enregistrées dans la table de renvois ; et
si le niveau d'importance de service des nouvelles informations de caractéristique de renvoi est égal au plus bas niveau d'importance de service parmi les niveaux d'importance de service correspondant aux informations de caractéristique de renvoi enregistrées dans la table de renvois, le module de traitement d'informations de caractéristique de renvoi n'enregistre pas les nouvelles informations de caractéristique de renvoi, ou supprime une information de caractéristique de renvoi correspondant au plus bas niveau d'importance de service dans la table de renvois en fonction d'une règle prédéterminée, enregistre les nouvelles informations de caractéristique de renvoi dans la table de renvois, et enregistre le niveau d'importance de service correspondant aux nouvelles informations de caractéristique de renvoi dans le module de mémorisation de table de niveaux d'importance de service.

9. Dispositif selon la revendication 7 ou 8, dans lequel le module de traitement d'informations de caractéristique de renvoi comprend :
un module d'extraction de niveau d'importance de service adapté pour extraire le plus bas niveau d'importance de service parmi les niveaux d'importance de service correspondant aux nouvelles informations de caractéristique de renvoi et niveaux d'importance de service enregistrés ; et
un module d'enregistrement d'informations de renvoi adapté pour supprimer les informations de caractéristique de renvoi correspondant au plus bas niveau d'importance de service, enregistrer les nouvelles informations de caractéristique de renvoi dans la table de renvois, et enregistrer le niveau d'importance de service correspondant aux nouvelles informations de caractéristique de renvoi dans le module de mémorisation de table de niveaux d'importance de service.
